# EUROPÄISCHE PATENTSCHRIFT

(11) **EP 2 883 786 B1**
(45) Veröffentlichungstag und Bekanntmachung des Hinweises auf die Patenterteilung: **12.09.2018**
(21) Anmeldenummer: 13196990.9
(22) Anmeldetag: 12.12.2013
(51) Int. Cl.: B64C 3/48

(54) **Verformbare Anströmkantenstruktur**
Deformable leading edge structure
Structure de bord d'attaque déformable

(43) Veröffentlichungstag der Anmeldung: 17.06.2015
(73) Patentinhaber: Airbus Defence and Space GmbH, 85521 Ottobrunn (DE)
(72) Erfinder: Kirn, Johannes, 80686 München (DE); Storm, Stefan, 85716 Unterschleißheim (DE)
(74) Vertreter: Kastel, Stefan

(56) Entgegenhaltungen:
- EP-A2- 2 256 032
- WO-A1-2013/061351
- FR-A1- 2 833 571
- US-A- 4 427 168

## Beschreibung

Die Erfindung betrifft ein insbesondere verformbares Strukturbauteil nach dem Oberbegriff des beigefügten Anspruchs 1. Weiter betrifft die Erfindung einen mit einem solchen Strukturbauteil aufgebauten oder versehenen fluiddynamischen, insbesondere aerodynamischen, Strömungskörper, insbesondere für ein Luftfahrzeug. Weiter betrifft die Erfindung ein mit einem solchen Strukturbauteil und/oder einem solchen Strömungskörper versehenes Luftfahrzeug.

Ein Strukturbauteil gemäß dem Oberbegriff des Anspruchs 1 ist aus der US 4 427 168 A bekannt. Diese Druckschrift beschreibt einen Tragflügel mit einer Auftriebshilfe, bei der eine als flexibles Paneel ausgebildete Haut des Tragflügels verformt wird. Ein Angriffspunkt einer Lasteinleitungseinrichtung befindet sich im Profilquerschnitt eines Stützbalkenprofils zum Stützen des flexiblen Paneels.

Aus der EP 2 256 032 A2 ist ein aerodynamisches Bauteil mit verformbarer Außenhaut bekannt, das in einer Auftriebshilfe an einer Vorderkante eines Tragflügels einsetzbar ist. Die Haut ist mit Omegastringern versteift.

Die Erfindung befasst sich insbesondere mit adaptiven Strukturen mit einer verformbaren dünnen Wandung oder Haut und einer Lasteinleitungseinrichtung zum optimierten Einleiten der Verformungskraft auf die Haut. Beispiele für adaptive Strukturen sind adaptive Strukturen zum Bilden von Auftriebshilfen oder dergleichen für Luftfahrzeuge oder andere fluiddynamische Strukturen, insbesondere für Fahrzeuge wie Luftfahrzeuge, Landfahrzeuge oder Wasserfahrzeuge (auch Unterwasserfahrzeuge), aber auch andere adaptive Strukturen wie optische Elemente, z.B. Spiegelelemente oder verformbare Linsen.

Ein derartiges verformbares Strukturbauteil für Luftfahrzeuge ist beispielsweise in dem Forschungsprojekt "SmartLED" (LuFo4) sowie in dem Forschungsprojekt "SADE(EU)" entwickelt und untersucht worden. Nähere Einzelheiten zu dem Projekt "SADE" sowie einen Nachweis für Veröffentlichungen hierzu sind unter der Webseite www.sade-projekt.eu/index.html abrufbar. Die hier vorliegende Erfindung ist im Rahmen eines aktuellen Projekts mit Namen SARISTU entstanden, das sich mit der Weiterentwicklung derartiger adaptiver Strukturen befasst.

Adaptive Strukturen der in dem Projekt SADE untersuchten Art sind besonders geeignet zur Verformung von aerodynamischen Flächen von Luftfahrzeugen, wie z.B. Flügeln, Flossen oder Rotorblättern. Insbesondere bei Flugzeugflügeln ist es vorteilhaft, als Auftriebshilfe anstatt konventionellen Vorflügeln sogenannte Kippnasen (Englisch: Droop Leading Edge Flap oder Droop Nose) zu verwenden. Bei der im Folgenden "Droop Nose" bezeichneten Kippnase wird die komplette Flügelnase nach unten abgewinkelt. Dadurch erhöht sich die Flügelwölbung. Eine Ausführung einer Kippnase ist z.B. beim Airbus A380 als sogenannte Droop-Nose Device am Innenflügel realisiert. Konventionelle Vorflügel sind ungeeignet für laminare Umströmung und darüber hinaus eine dominierende Lärmquelle.

Beim Airbus A380 ist die Droop-Nose Device durch eine Starrkörperbewegung realisiert, was bereits größere Vorteile gegenüber konventionellen Vorflügeln bedingt.

Die Untersuchungen des SADE-Projekts zielen darauf ab, adaptive Strukturen für aerodynamische Körper zu erreichen, mit denen gegenüber bekannten Droop-Nose-Vorrichtungen größere geometrische Freiheiten, eine Verringerung von lokalen Krümmungen und Belastungen und mehr laminare Umströmungen erreichbar sind.

Bei früheren Kippnase-Lösungen wird die gesamte Vordernase des Flügels insgesamt als Starrkörper bewegt. Bei dem aktuellen SARISTU-Projekt sowie bei den Vorgängerprojekten SADE und SmartLED geht man jedoch von dem Ansatz aus, die Primärstruktur zu verformen. Insoweit kann man ohne Spalte mit einer geschlossenen aerodynamischen Fläche arbeiten. Besonders bei Laminarprofilen ist von großer Bedeutung, dass in allen Flugphasen (verschiedene Anstellwinkel und Strömungsgeschwindigkeiten) die Strömung am Flügel eine besonders lange laminare Laufstrecke besitzt. Würde man bei einem Laminarprofil auf eine Vordernase verzichten, wäre beispielsweise zur Landung des Luftfahrzeugs eine höhere Aufsetzgeschwindigkeit nötig, um eine sichere Führung des Flugzeuges zu gewährleisten.

Beim Absenken der Vordernase wird die Primärstruktur derart verformt, dass der Bereich der kleinsten Krümmungsradien an der Flügelvorderkante nach unten wandert, was einem Abrollen der Hautstruktur gleichkommt.

Die Erfindung ist somit auf ein verformbares Strukturbauteil mit einer großflächig zu verformenden Haut und wenigstens einem Versteifungsprofil zum Versteifen der Haut gerichtet, welches Strukturbauteil durch Aktoren oder dergleichen verformbar ist, um eine adaptive Struktur zu schaffen.

Zur Verformung adaptiver dünnwandiger Strukturen, wie z.B. für Droop Nose-Anordnungen, erfolgt die Krafteinleitung bevorzugt mittels einer Hilfsstruktur, wie z.B. mittels Omegastringer, um lokale Spannungsüberhöhungen zu reduzieren und die Verformbarkeit der Primärstruktur nicht zu behindern.

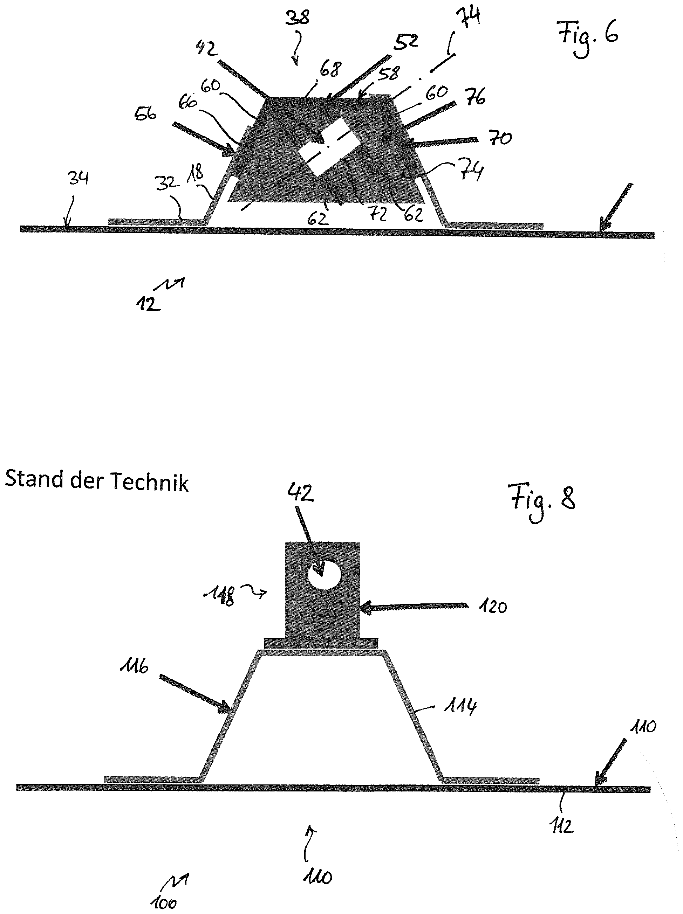

Fig. 8 zeigt den aus dem SADE-Projekt bekannten Ansatz. In Fig. 8 ist eine adaptive dünnwandige Struktur 100 mit einem verformbaren Strukturbauteil 110 gezeigt, welches eine zu verformende Haut 112 und ein Versteifungsprofil 114 zum Versteifen der Haut 112 aufweist. Das Versteifungsprofil 114 ist z.B. ein Omegastringer 116 und ist fest mit der Haut 112 verbunden.

Das Versteifungsprofil 114 ist ein Beispiel für die oben genannte Hilfsstruktur. An dieser Hilfsstruktur wird eine Lasteinleiteinrichtung 118 angebracht, um Lasten zur Verformung der Struktur 100 über die Hilfsstruktur in die Primärstruktur einzubringen. Die Lasteinleiteinrichtung 118 weist insbesondere Beschläge 120 auf, die an einer Hilfsstruktur, insbesondere an dem Versteifungsprofil 114, angebracht werden, um hierüber eine beweglich gelagerte Krafteinleitung - z.B. via Streben mit Gelenkkopf, nicht dargestellt - zu ermöglichen.

Wie in Fig. 8 gezeigt, wurde bei dem bisherigen Projekt SADE bei ähnlichen Anforderungen die Last außerhalb der Primärstruktur- Haut 112 - mittels Omegastringer 116 und Beschlägen 120 eingeleitet.

Die Hilfsstruktur und die Beschläge 120 schränken den Bauraum stark ein und erschweren die Integration von lasteinleitenden Kinematikstrukturen bzw. können diese unmöglich machen.

Aufgabe der Erfindung ist es daher, eine adaptive Struktur bezüglich der Einsatzmöglichkeiten und der Integration von lasteinleitenden Kinematikstrukturen zu verbessern.

Zum Lösen dieser Aufgabe schlägt die Erfindung ein Strukturbauteil der in Anspruch 1 genannten Art vor. Vorteilhafte Verwendungen des Strukturbauteils sind Gegenstand der Nebenansprüche.

Vorteilhafte Ausgestaltungen der Erfindung sind Gegenstand der Unteransprüche.

Ein Strukturbauteil gemäß einem ersten Aspekt der Erfindung hat eine Lasteinleitungseinrichtung zum Einleiten einer Verformungskraft auf eine zu verformende Haut des Strukturbauteils, mit einem Profil zum Verteilen der Verformungskraft auf einem Bereich der zu verformenden Haut und Angriffstellen oder Angriffspunkte zum Einleiten der Verformungskraft auf das Profil, wobei die Angriffstellen oder Angriffspunkte zwischen der Oberfläche der Haut und der größten Erstreckung der Profilform des Profils in Richtung senkrecht zu der Oberfläche der Haut angeordnet ist.

Es ist bevorzugt, dass die Lasteinleitungseinrichtung Gelenke mit einer Drehachse aufweist, die durch die jeweilige Angriffsstelle oder den jeweiligen Angriffspunkt läuft.

Bei dem erfindungsgemäßen Strukturbauteil ist vorgesehen, dass die Lasteinleitungseinrichtung Beschläge aufweist.

Es ist bevorzugt, dass die Drehachse mit wenigstens einer Richtungskomponente in Längsrichtung des Profils verläuft oder mit wenigstens einer Richtungskomponente quer zur Längsrichtung des Profils verläuft.

Es ist vorgesehen, dass die Angriffstellen oder die Angriffpunkte innerhalb einer Kontur der Profilform des Profils liegt.

Es ist vorgesehen, dass das Profil beabstandete lokale Öffnungen und/oder Unterbrechungen aufweist, durch die jeweils ein als Beschlag ausgebildetes Lasteinleitungselement in das Innere des Profils zur Anlenkung an der Angriffsstelle oder dem Angriffpunkt geführt ist.

Es ist bevorzugt, dass die Lasteinleitungseinrichtung wenigstens einen Befestigungsbereich zur Befestigung an dem Profil aufweist, wobei der Befestigungsbereich als Verstärkung und/oder Versteifung des Profils ausgebildet ist.

Es ist bevorzugt, dass die Lasteinleitungseinrichtung an das Profil mittels einer oder mehrerer Befestigungen befestigt ist, die ausgewählt sind aus einer Gruppe, die wenigstens eine Verschraubung, wenigstens eine Niete, eine stoffschlüssige Verbindung, eine Verschweißung, eine Verklebung, eine nasse Verklebung, eine Befestigung von innen und eine Befestigung von außen enthält.

Gemäß einem weiteren Aspekt schafft die Erfindung ein insbesondere verformbares Strukturbauteil, vorzugsweise für eine adaptive Struktur, mit einer zu verformenden Haut, wenigstens einem an einer Oberfläche der Haut angebrachtem Verteilungs- und/oder Versteifungsprofil zum Verteilen der Verformungskraft auf die Haut und/oder zum Versteifen der Haut mit einer Lasteinleiteinrichtung gemäß einer der zuvor erläuterten Ausgestaltungen.

Es ist vorgesehen, dass die Angriffstelle oder der Angriffspunkt in einem Raumbereich liegt, der einerseits durch die Oberfläche der Haut und andererseits durch eine gedachte Parallelfläche begrenzt ist, die durch die Menge der mit einem Abstand A zu der Oberfläche beabstandeten Punkte definiert ist, wobei der Abstand A der größten Erstreckung der Profilform des Verteilungs- oder Versteifungsprofils in Richtung senkrecht zu der Oberfläche entspricht.

Es ist vorgesehen, dass das Strukturbauteil ein Strukturbauteil für ein Fahrzeug, insbesondere ein Luftfahrzeug (20), oder ein Strukturbauteil eines Spiegelelements mit einer an der Haut gebildeten verformbaren Spiegelfläche ist.

Es ist vorgesehen, dass das Strukturbauteil ein Bauteil für einen fluiddynamischen, insbesondere aerodynamischen, Strömungskörper ist, wobei eine Außenoberfläche der Haut zur fluiddynamisch, insbesondere aerodynamisch, wirksamen Anströmung ausgebildet ist und zur Änderung einer fluiddynamischen, insbesondere aerodynamischen, Wirkung zu verformen ist, wobei die Oberfläche mit dem Verteilungs- und/oder Versteifungsprofil eine innere Oberfläche der Haut ist.

Es ist weiter vorgesehen, dass das Verteilungs- und/oder Versteifungsprofil ein Omegastringer ist.

Vorzugsweise ist weiter ein Aktuator zum Verformen der Haut vorgesehen, wobei ein Abtrieb des Aktuators über den Angriffspunkt mit dem Verteilungs- und/oder Versteifungsprofil verbunden ist.

Gemäß einem weiteren Aspekt schafft die Erfindung einen fluiddynamischen Strömungskörper vorzugsweise für ein Luftfahrzeug, umfassend wenigstens ein verformbares Strukturbauteil nach einer der voranstehenden Ausgestaltungen.

Es ist bevorzugt, dass der Strömungskörper ausgebildet ist als Tragflügel oder Leitwerksflosse eines Flugzeugs.

Gemäß einem weiteren Aspekt schafft die Erfindung ein Luftfahrzeug, umfassend ein Strukturbauteil gemäß einer der oben genannten Ausgestaltungen.

Gemäß einem weiteren Aspekt schafft die Erfindung ein Luftfahrzeug umfassen einen Strömungskörper gemäß einer der oben genannten Ausgestaltungen.

Gemäß einem weiteren Aspekt schafft die Erfindung ein Luftfahrzeug, umfassend eine Auftriebshilfe.

Die Auftriebshilfe umfasst bevorzugt eine Lasteinleiteinrichtung der oben genannten Art.

Die Auftriebshilfe umfasst bevorzugt ein Strukturbauteil der oben genannten Art.

Die Auftriebshilfe umfasst bevorzugt einen Strömungskörper der oben genannten Art.

Gemäß einer bevorzugten Ausgestaltung schafft die Erfindung insbesondere ein verformbares Strukturbauteil, mit einer zu verformenden Haut, wenigstens einem an einer Hautoberfläche der Haut angebrachtem Versteifungsprofil zum Versteifen der Haut und einer Lasteinleitungseinrichtung mit einem Angriffspunkt zum Einleiten einer Verformungskraft von einem Aktuator auf das Versteifungsprofil, wobei der Angriffspunkt in einem Raumbereich liegt, der einerseits durch die Hautoberfläche und andererseits durch eine gedachte Parallelfläche begrenzt ist, die durch die Menge aller mit einem Abstand A zu der Hautoberfläche beabstandeten Punkte definiert ist, wobei der Abstand A der größten Erstreckung des Versteifungsprofils in Richtung senkrecht zu der Hautoberfläche entspricht.

Es ist bevorzugt, dass das Lasteinleitungseinrichtung ein Gelenk mit einer Gelenkachse aufweist, die durch den Angriffspunkt läuft.

Es ist bevorzugt, dass die Gelenkachse mit wenigstens einer Richtungskomponente in Längsrichtung des Versteifungsprofils verläuft oder mit wenigstens einer Richtungskomponente quer zur Längsrichtung des Versteifungsprofils verläuft.

Es ist bevorzugt, dass der Angriffspunkt innerhalb einer Kontur des Versteifungsprofils liegt.

Es ist bevorzugt, dass das Strukturbauteil ein Strukturbauteil eines Luftfahrzeuges ist.

Es ist bevorzugt, dass das Strukturbauteil ein Bauteil für einen aerodynamischen Strömungskörper ist, wobei eine Außenoberfläche der Haut aerodynamisch wirksam angeströmt wird und zur Änderung einer aerodynamischen Wirkung - insbesondere großflächig - zu verformen ist, wobei die Hautoberfläche mit dem Versteifungsprofil eine Innenoberfläche der Haut ist.

Es ist bevorzugt, dass das Versteifungsprofil ein Omegastringer ist.

Es ist bevorzugt, dass die Lasteinleitungseinrichtung einen Beschlag aufweist.

Es ist bevorzugt, dass das Versteifungsprofil eine lokale Öffnung und/oder Unterbrechung aufweist, durch die ein Lasteinleitungselement in das Innere des Versteifungsprofils zur Anlenkung an dem Angriffspunkt geführt ist.

Es ist bevorzugt, dass die Lasteinleitungseinrichtung wenigstens einen Befestigungsflansch zur Befestigung an dem Versteifungsprofil aufweist, wobei der Befestigungsflansch zur Verstärkung und/oder Versteifung des Versteifungsprofils ausgebildet ist.

Es ist bevorzugt, dass die Lasteinleitungseinrichtung an das Versteifungsprofil mittels einer oder mehrere Befestigungen befestigt ist, die ausgewählt sind aus einer Gruppe, die wenigstens eine Verschraubung, wenigstens eine Niete, eine stoffschlüssige Verbindung, eine Verschweißung, eine Verklebung, eine nasse Verklebung, eine Befestigung von innen und eine Befestigung von außen enthält.

Es ist bevorzugt, dass das Strukturbauteil einen Aktuator aufweist zum Verformen der Haut, wobei ein Abtrieb des Aktuators über den Angriffspunkt mit dem Versteifungsprofil verbunden ist. Der Aktuator kann z.B. einen Stellmotor und einen dadurch angetriebenen Antriebsmechanismus mit Getriebeelementen aufweisen.

Gemäß einem weiteren Aspekt schafft die Erfindung einen aerodynamischen Strömungskörper für ein Luftfahrzeug, umfassend wenigstens ein verformbares Strukturbauteil gemäß einer der zuvor erläuterten Ausgestaltungen der Erfindung.

Es ist bevorzugt, dass der Strömungskörper als Tragflügel oder Leitwerksflosse eines Flugzeugs ausgebildet ist.

Gemäß einem weiteren Aspekt schafft die Erfindung ein Luftfahrzeug, umfassend ein Strukturbauteil gemäß einer der zuvor erläuterten Ausgestaltungen und/oder einen Strömungskörper gemäß einer der zuvor erläuterten Ausgestaltungen.

Insbesondere wird eine adaptive Struktur vorgeschlagen, bei der eine Verformungslast über ein Profil in eine zu verformende Haut eingeleitet wird. Unter einem Profil wird insbesondere eine Leiste oder dergleichen längliches Element verstanden, die bzw. das über seine Länge hinweg eine bestimmte Querschnittsform - Profilform - aufweist. Erfindungsgemäß befinden sich nun Angriffstellen zur Lasteinleitung in das Profil innerhalb eines Bereichs, der durch die Erstreckung der Profilform von der Haut weg begrenzt ist. Demnach befindet sich der Angriffspunkt nicht mehr noch weiter als die Profilform entfernt von der Haut, sondern näher zur Hautoberfläche hin. Insbesondere sind Angriffspunkte innerhalb des Profils, also innerhalb eines durch eine Außenkontur des Profils begrenzten Raumbereichs gewählt.

Bei bisherigen verformbaren, adaptiven, dünnwandigen Strukturen, wie z.B. für eine Droop Nose, erfolgt die Krafteinleitung bevorzugt mittels einer Hilfsstruktur (z.B. Omegastringer), um lokale Spannungsüberhöhungen zu reduzieren und die Verformbarkeit der Primärstruktur nicht zu behindern. An dieser Hilfsstruktur werden Beschläge angebracht, um hierüber eine beweglich gelagerte Krafteinleitung (z.B. via Streben und Gelenkkopf) zu ermöglichen. Die Hilfsstruktur und die Beschläge schränken den Bauraum stark ein und erschweren die Integration von lasteinleitenden Kinematikstrukturen bzw. können diese unmöglich machen.

Mit der Erfindung sowie deren vorteilhaften Ausgestaltungen wird eine alternative Lasteinleitung für eine adaptive Struktur geschaffen. In vorhergehenden Projekten zur Erforschung adaptiver Strukturen wurde bei ähnlichen Anforderungen die Last außerhalb der Struktur mittels Omegastringern und Beschlägen eingeleitet. Will man jedoch einen Flügel oder einen sonstigen aerodynamischen Körper für ein Luftfahrzeug schaffen, der laminar umströmt werden kann, dann wäre eine möglichst schlanke Struktur - z.B. ein schlanker Laminar-Flügel - vorteilhaft. Bei besonders schlanken Laminar-Flügeln sind die bisherigen Lösungen bei der gegebenen Geometrie aus Platzmangel nicht verwendbar; damit wäre die Funktionalität der benötigten Kinematik nicht gegeben.

Bei der Erfindung kann die verlorene Bauhöhe von Omegastringer und Beschlag zurückgewonnen werden, indem der Lasteinleitungspunkt des Beschlages in den Omegastringer hinein verlegt wird. Bei einer vorteilhaften Ausgestaltung wird hierzu der Omegastringer lokal aufgeschnitten und ein entsprechend angepasster Beschlag eingesetzt. Eine damit einhergehende Steifigkeitsreduktion des Omegastringers kann z.B. über die Steifigkeit des Beschlags ausgeglichen werden, indem dieser mit den Flanken des Stringers (nicht an der adaptiven Struktur) verbunden wird. Der Anbau des Beschlages kann von außen oder innen angeschraubt oder "nass" mit dem Stringer verklebt werden.

Vorteile der Erfindung oder deren vorteilhaften Ausgestaltungen können sein:
Die Last wird weiterhin über Beschlag und Stringer in die Struktur eingeleitet und passt sich aufgrund der beweglichen Lagerung der Verformung der Struktur an. Die Primärstruktur lässt sich - anders als bei früheren Festkörperlösungen - ohne Behinderung der Lasteinleiteinrichtung verformen.

Ein besonders interessanter Vorteil ist der gewonnene Bauraum, der ein vereinfachtes Kinematikkonzept und/oder Antriebskonzept erlaubt. Damit lässt sich ein geringeres Gesamtgewicht, ein geringerer Wartungsaufwand und eine höhere Zuverlässigkeit erreichen.

Im Falle von Querlasten auf die Beschläge wird aufgrund des geringen Abstandes zwischen adaptiver Struktur und Lasteinleitungspunkt eine geringere ungewünschte Momentbelastung verursacht.

Ausführungsbeispiele der Erfindung werden nachfolgend anhand der beigefügten Zeichnung näher erläutert. Darin zeigt:
- Fig. 1: eine schematische Draufsicht auf ein Luftfahrzeug in Form eines Flugzeuges mit einer Droop Nose-Auftriebshilfe zum Darstellen eines Beispiels für adaptive Strukturen mit einem verformbaren Strukturbauteil;
- Fig. 2: einen Schnitt entlang der Linie II-II von Fig. 1 durch die adaptive Struktur und das verformbare Strukturbauteil;
- Fig. 3: eine Querschnittsdarstellung durch eine erste Ausführungsform einer Lasteinleiteinrichtung für das verformbare Strukturbauteil von Fig. 2;
- Fig. 4: eine Ansicht vergleichbar der Fig. 3 für eine zweite Ausführungsform der Lasteinleiteinrichtung;
- Fig. 5: eine Ansicht vergleichbar der Fig. 3 oder 4 einer dritten Ausführungsform einer Lasteinleiteinrichtung;
- Fig. 6: eine Ansicht vergleichbar den Fig. 3 bis 5 einer vierten Ausführungsform einer Lasteinleiteinrichtung;
- Fig. 7: eine perspektivische Darstellung der Lasteinleiteinrichtung von Fig. 6; und
- Fig. 8: eine Darstellung vergleichbar der Fig. 3 bis 6 einer Lasteinleiteinrichtung für eine vergleichbare Struktur aus dem Stand der Technik.

Im Folgenden werden unterschiedliche Ausführungsbeispiele für adaptive dünnwandige Strukturen mit einem verformbaren Strukturbauteil 12 am Beispiel eines fluiddynamischen Strömungskörpers, hier z.B. in Form eines aerodynamischen Strömungskörpers 14, mit verformbarer fluiddynamischer, insbesondere aerodynamischer, Fläche näher erläutert. Die Erfindung ist jedoch allgemein auf alle dünnwandigen adaptiven Strukturen mit verformbaren Strukturbauteilen, die eine zu verformende Haut 16 und eine indirekte Lasteinleitung über jegliche Profile 18 der Haut 16 aufweisen, anwendbar. Als Beispiel für ein Profil, über das eine Last auf die Haut 16 eingeleitet werden kann ist ein Versteifungsprofil 18 gezeigt.

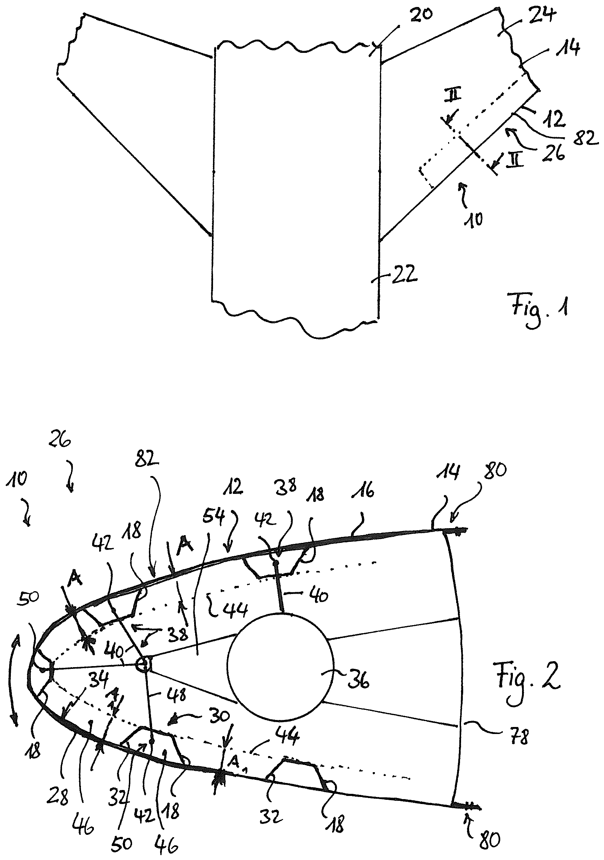

Als Beispiel für den aerodynamischen Strömungskörper 14 ist in Fig. 1 ein Luftfahrzeug 20, hier z.B. in Form eines Flugzeuges 22, gezeigt, wobei die Flügel 24 mit Droop-Nose-Auftriebshilfen versehen sind, die durch die adaptive Struktur 10 realisiert werden.

Besonders bei Laminarprofilen ist von großer Bedeutung, dass in allen Flugphasen (verschiedene Anstellwinkel und Strömungsgeschwindigkeiten) die Strömung am Flügel 24 eine besonders lange laminare Laufstrecke besitzt. Würde man bei einem Laminarprofil auf eine adaptive Vordernase verzichten, wäre beispielsweise zur Landung des Luftfahrzeugs 20 eine höhere Aufsetzgeschwindigkeit nötig, um eine sichere Führung des Flugzeuges 22 zu gewährleisten.

Beim Absenken der Vordernase der gezeigten Ausführungsformen wird die Primärstruktur derart verformt, dass der Bereich der kleinsten Krümmungsradien an der Flügelvorderkante nach unten wandert, was einem Abrollen der Hautstruktur gleichkommt. Eine gute Verformbarkeit der Haut 16 wird z.B. durch die Wahl geeigneter Materialien und einer dünnwandigen Hautstruktur erreicht. Z.B. sind durch den Einsatz von glasfaserverstärkter Kunststoff (GFK) oder Polyetheretherketon (PEEK) Randfaserdehnungen von ca. 1% ermöglicht.

In Fig. 2 ist eine Querschnittsdarstellung entlang der Linie II-II von Fig. 1 dargestellt. Die adaptive Struktur 10 weist demnach das verformbare Strukturbauteil 12 auf. Das verformbare Strukturbauteil 12 ist als Teil des aerodynamischen Strömungskörpers 14 ausgebildet und weist die Haut 16 auf, die zur Anpassung des aerodynamischen Strömungskörpers 14 an eine gewünschte aerodynamische Wirkung insgesamt großflächig zu verformen ist.

Demnach weist die adaptive Struktur 10 eine zu verformende Primärstruktur 28 auf, die möglichst ungestört verformt werden soll, wobei keine Spalte und keine überhöhten Krümmungsradien an der Oberseite entstehen sollen. Hierzu wird die Verformungskraft über eine Hilfsstruktur 30 nur mittelbar in die Primärstruktur 28 eingeleitet.

Die Hilfsstruktur 30 weist mehrere Versteifungsprofile 18 auf. Die Versteifungsprofile 18 sind durch Omegastringer 32 gebildet. Bevorzugt sind demnach Hohlprofile mit einer auf einer größeren Fläche verteilten Befestigung zu der Haut 16.

Demnach sind die Versteifungsprofile 18 auf einer inneren Oberfläche 34 der zu verformenden Haut 16 befestigt.

Weiter ist wenigstens ein Aktuator 36 zur Einleitung einer gewünschten Verformungskraft vorgesehen. Der Aktuator 36 ist über eine Lasteinleitungseinrichtung 38 zum Einleiten der Verformungslast mit den Versteifungsprofilen 18 verbunden.

Die Lasteinleitungseinrichtung 38 weist Lasteinleitungselemente 40 auf, die die Last an Angriffspunkten 42 - auch Angriffsstellen genannt - in die Versteifungsprofile 18 oder allgemeiner die Hilfsstruktur 30 einleiten.

Mit gestrichelten Linien ist eine gedachte Parallelfläche 44 angedeutet, die mit Abstand A parallel mit entsprechender Kontur zu der inneren Oberfläche 34 verläuft. Der Abstand A entspricht der Erstreckung der Dicke des jeweils nächstliegenden Versteifungsprofils. Somit wird durch die Parallelfläche 44 einerseits und die Oberfläche 34 andererseits ein das jeweilige Versteifungsprofil 18 einschließender Raumbereich als Nahbereich zu der Oberfläche 34 definiert.

Anders als im in Fig. 8 dargestellten Stand der Technik, wo die Beschläge 120 Angriffspunkte mit Abstand weiter von dem Omegastringer 116 nach innen schaffen, ist bei der in Fig. 2 dargestellten adaptiven Struktur mit dem entsprechenden verformbaren Strukturbauteil 12 vorgesehen, dass der Angriffspunkt 42 zum Einleiten einer zu verformenden Last in ein Versteifungsprofil 18 innerhalb dieses Raumbereiches 46 nahe der Oberfläche 34 liegt.

Dabei sind die Versteifungsprofile 18 durch Hohlprofile, nämlich durch die Omegastringer 32 gebildet, wobei weiter vorgesehen ist, dass die Angriffspunkte 42 jeweils im durch die Kontur der Versteifungsprofile 18 umschlossenen Raumbereich liegen, wie dies in den Fig. 2 bis 7 dargestellt ist.

Der Aktuator 36 weist beispielsweise einen Stellmotor auf, der Kraft über Streben 48 mit Gelenkkopf 50 in als Beschläge 52 ausgebildete Lasteinleitungselemente 40 am Angriffspunkt 42 einleitet.

Wie in Fig. 2 dargestellt, bleibt der gesamte Raum innerhalb der Parallelfläche 44 für die Realisierung unterschiedlicher Kinematikstrukturen verfügbar. Dies ist insbesondere von Vorteil, wenn das zu verformende Strukturbauteil 12 insgesamt schlanker auszubilden ist, um eine Verbesserung von laminaren Umströmungen zu erreichen. Auch der Raum in dem Raumbereich 46 zwischen den einzelnen Versteifungsprofilen 18 kann bei Bedarf ausgenutzt werden.

Zur Verformung des vorderen Bereiches des Strukturbauteils 12 ist in der in Fig. 2 dargestellten Ausführungsform noch ein durch den Aktuator 36 verschwenkbarer Haupthebel 54 dargestellt, der mittels der Streben 48 mit den Beschlägen 52 verbunden ist.

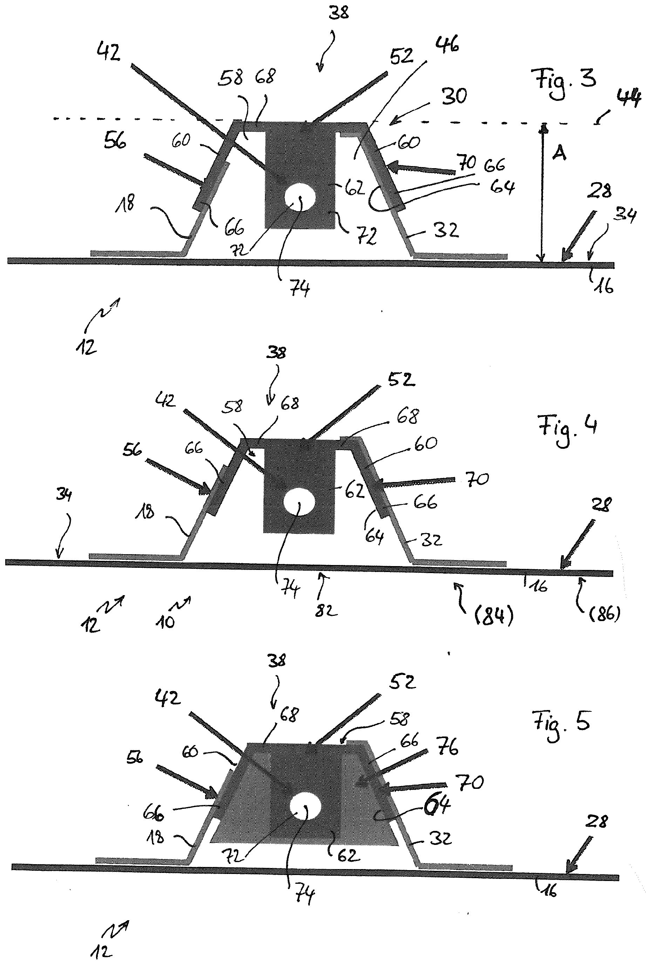

Im Folgenden werden unterschiedliche Ausgestaltungen der Lasteinleitungseinrichtung 38 anhand der Darstellungen der Fig. 3 bis 7 näher erläutert. Dabei werden für entsprechende Teile entsprechende Bezugszeichen verwendet.

In Fig. 3 ist eine erste Ausführungsform der Lasteinleitungseinrichtung 38 näher dargestellt.

Das Versteifungsprofil 18 wird durch einen Stringer 56, nämlich einen Omegastringer 32, gebildet, der sich in Längsrichtung des zu verformenden Strukturbauteils 12 erstreckt. Bei der in Fig. 1 dargestellten beispielhaften Verwendung der adaptiven Struktur entspricht die Längsrichtung der Spannweitenrichtung. An mehreren beabstandeten Stellen weist der Stringer 56 Aufnahmeöffnungen zur Aufnahme von Beschlägen 52 auf, von denen in den Figuren jeweils nur eine dargestellt ist.

Der Beschlag 52 wird bei der in Fig. 3 dargestellten Ausführungsform von außen am Stringer 56 befestigt.

Der Beschlag 52 weist vorzugsweise einen Befestigungsbereich 60 zum Befestigen des Beschlages 52 an dem Versteifungsprofil 18 und einen Gelenkbereich 62 zur gelenkigen Anlenkung der Strebe 48 oder sonstiger Lasteinleitungselemente 40 auf.

In dem in Fig. 3 dargestellten Ausführungsbeispiel weist der Befestigungsbereich 60 eine Kanalform 64 mit zwei Schenkeln 66 und einem diese verbindenden Steg 68 auf. Die Schenkel 66 wirken als Versteifung 70. An dem Steg 68 ist der Gelenkbereich 62, beispielsweise in Form einer Gelenkpfanne 72, zur Aufnahme des Gelenkkopfes 50 ausgebildet.

Durch das Gelenk des Beschlages 52 wird eine Drehachse 74 definiert, die durch den Angriffspunkt 42 läuft bzw. diesen definiert.

Der Befestigungsbereich 60 wird z.B. durch nicht dargestellte Befestiger - z.B. Schrauben oder Niete - oder durch eine stoffschlüssige Verbindung - je nach Materialauswahl für Beschlag 52 und Stringer 56 zu wählen - befestigt. Beispielsweise kann eine Verklebung zwischen dem Befestigungsbereich 60 und dem Stringer 56 erfolgen.

Während bei der Ausgestaltung der Fig. 3 eine Befestigung des Beschlages 52 von außen gezeigt ist, ist bei der in Fig. 4 dargestellten zweiten Ausführungsform der Lasteinleitungseinrichtung 38 eine Befestigung des Beschlages 52 von innen am Stringer 56 vorgesehen. Hier wird der Beschlag 52 beispielsweise vor einer Befestigung des Stringers 56 an der Haut 16 der Primärstruktur 28 befestigt. Ansonsten entspricht die zweite Ausgestaltung der ersten Ausgestaltung, und es kann für weitere Einzelheiten auf die zuvor wiedergegebene Beschreibung verwiesen werden.

In Fig. 5 ist eine dritte Ausführungsform der Lasteinleitungseinrichtung 38 dargestellt, die im Wesentlichen der zweiten Ausführungsform von Fig. 4 entspricht. Auch hier wird der Beschlag von innen am Stringer befestigt. Hier wirken die Schenkel 66 des Befestigungsbereiches 60 ebenfalls als Versteifung 70 für den Stringer 56. Zusätzlich sind zwischen dem Gelenkbereich 62 und den Schenkeln 66 oder auch nur zwischen den Schenkeln 66 untereinander oder zwischen den Schenkeln 66 und dem Steg 68 Versteifungsstege oder wenigstens eine Versteifungsrippe 76 vorgesehen.

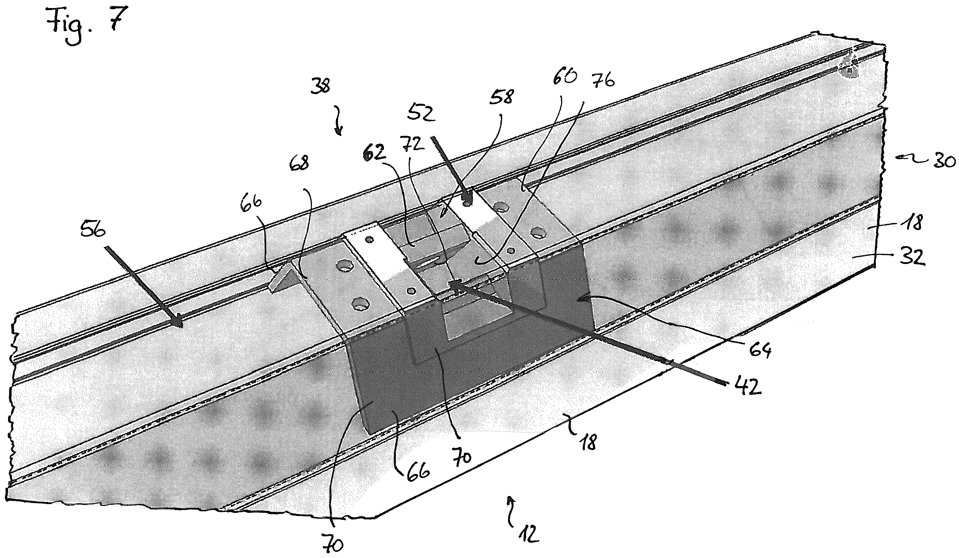

Eine weitere mögliche Ausgestaltung der Lasteinleitungseinrichtung 38 ist in den Fig. 6 und 7 dargestellt. Fig. 6 zeigt dabei die Schnittdarstellung vergleichbar der Fig. 3 bis 5 und Fig. 7 zeigt eine perspektivische Ansicht auf die in Fig. 6 im Schnitt dargestellte Struktur 10.

Die in den Fig. 6 und 7 dargestellte vierte Ausführungsform der Lasteinleitungseinrichtung 38 entspricht im Wesentlichen der in Fig. 5 dargestellten dritten Ausführungsform mit dem Unterschied, dass die Lasteinleitung um 90° aus der Stringerrichtung gedreht ist. Die Drehachse 74 verläuft jetzt nicht mehr senkrecht zur Längsrichtung des Versteifungsprofils 18, wie bei den zuvor erläuterten Ausführungsformen, sondern mit wenigstens einer Richtungskomponente quer zu dieser Längsrichtung. In dem dargestellten Beispiel verläuft die Drehachse 74 insgesamt senkrecht zu der Längsrichtung des Stringers 56.

Ansonsten entspricht die vierte Ausführungsform der dritten Ausführungsform und es wird für weitere Einzelheiten auf die obige Darstellung verwiesen.

Bei der vierten Ausführungsform der Lasteinleitungseinrichtung 38 ist die Lasteinleitung um 90° zum Stringer 56 gedreht und um ca. 20° aus der Ebene verschwenkt. Dies ist ein Beispiel für eine Ausgestaltung der Lasteinleitungseinrichtung 38, wobei die Drehachse 74 im Wesentlichen senkrecht zur Längsrichtung des Versteifungsprofils 18 und schräg zu der Oberfläche 34 verläuft.

Anstelle der dargestellten Beschläge 52 mit nur einer Drehachse 74 kann die Lasteinleitungseinrichtung 38 auch ein Gelenk mit mehreren Freiheitsgraden aufweisen, beispielsweise ein Gelenk mit wenigstens zwei Drehachsen, wie z.B. ein Kugelgelenk oder ein Kreuzgelenk.

Auch ist eine starre Anlenkung einer Strebe 48 an dem Angriffspunkt 42 zu dem Versteifungsprofil 18 möglich.

Bevorzugte Verwendungen der adaptiven Struktur 10 sind adaptive aerodynamische Strömungskörper 14, die eine Adaption durch reine Verformung einer Haut 16 durchführen.

Fig. 2 zeigt hierzu, dass die Haut 16 an einem Tragbauteil 78 mit beiden Übergangsbereichen oder Endbereichen 80 fix, d.h. ortsfest, befestigt ist. Eine Adaption der aerodynamisch wirksamen Außenoberfläche 82 der Primärstruktur 28 erfolgt allein durch Verformung des zwischen diesen Bereichen 80 ausgebildeten Mittelbereichs der Primärstruktur 28 und nicht durch Starrkörperbewegung.

Die in den Fig. 3 bis 7 dargestellten Ausführungsbeispiele von adaptiven Strukturen 10 und Lasteinleitungseinrichtungen sind nicht auf die in Fig. 2 dargestellte beispielhafte Verwendung begrenzt, sondern können auch auf anderen technischen Gebieten, wie z.B. der Optik eingesetzt werden. Z.B. kann die adaptive Struktur 10 - wie in Fig. 4 mit Bezugszeichen in Klammern angedeutet auch ein Spiegelelement 84 mit einer an der Haut 16 ausgebildeten verformbaren Spiegelfläche 86 sein.

### Bezugszeichenliste:

- 10: adaptive Struktur
- 12: verformbares Strukturbauteil
- 14: aerodynamischer Strömungskörper
- 16: zu verformende Haut
- 18: Versteifungsprofil
- 20: Luftfahrzeug
- 22: Flugzeug
- 24: Flügel
- 26: Droopnose-Auftriebshilfe
- 28: zu verformende Primärstruktur
- 30: Hilfsstruktur
- 32: Omegastringer
- 34: Oberfläche
- 36: Aktuator
- 38: Lasteinleitungseinrichtung
- 40: Lasteinleitungselement
- 42: Angriffspunkt
- 44: Parallelfläche
- 46: Raumbereich
- 48: Streben
- 50: Gelenkkopf
- 52: Beschlag
- 54: Haupthebel
- 56: Stringer
- 58: Aufnahmeöffnung
- 60: Befestigungsbereich
- 62: Gelenkbereich
- 64: Kanalform
- 66: Schenkel
- 68: Steg
- 70: Versteifung
- 72: Gelenkpfanne
- 74: Drehachse
- 76: Versteifungsrippe
- 78: Tragbauteil
- 80: Endbereich
- 82: Außenoberfläche
- 84: Spiegelelement
- 86: Spiegelfläche
- 100: Struktur
- 110: verformbares Strukturbauteil
- 112: Haut
- 114: Versteifungsprofil
- 116: Omegastringer
- 118: Lasteinleiteinrichtung
- 120: Beschlag

## Patentansprüche

1. Strukturbauteil (12) für ein Fahrzeug, insbesondere ein Luftfahrzeug (20), wobei das Strukturbauteil (12) ein Bauteil für einen fluiddynamischen Strömungskörper (14) ist, mit:
einer zu verformenden Haut (16), wobei eine Außenoberfläche (82) der Haut (16) zur fluiddynamisch wirksamen Anströmung ausgebildet ist und zur Änderung einer fluiddynamischen Wirkung verformbar ist,
wenigstens einem an einer inneren Oberfläche (34) der Haut (16) angebrachten Verteilungs- und Versteifungsprofil (18) zum Verteilen der Verformungskraft auf einem Bereich der Haut (16) und zum Versteifen der Haut (16), wobei das Verteilungs- und Versteifungsprofil (18) ein Omegastringer (32) ist,
einer Lasteinleitungseinrichtung (38) zum Einleiten einer Verformungskraft in die zu verformende Haut des Strukturbauteils, mit Angriffstellen oder Angriffspunkten (42) zum Einleiten der Verformungskraft in den Omegastringer (32), wobei die Angriffstellen oder Angriffspunkte (42) innerhalb eines durch die Außenkontur des Omegastringers (32) begrenzten Raumbereichs im Inneren des Omegastringers (32) liegen, und mit als Beschlägen (52) ausgebildeten Lasteinleitungselementen (40), die in den Raumbereich im Inneren des Omegastringers (32) zur Anlenkung an jeweils eine der Angriffstellen oder einen der Angriffspunkte (42) geführt sind,
**dadurch gekennzeichnet,**
**dass** der Raumbereich durch die innere Oberfläche der Haut (16) begrenzt und durch die Außenkontur des Omegastringers (32) umschlossen ist und dass der Omegastringer (32) an mehreren beabstandeten Stellen Aufnahmeöffnungen (58) zur Aufnahme der Beschläge (52) aufweist, wobei die Aufnahmeöffnungen (58) durch lokale Öffnungen (58) und/oder Unterbrechungen in dem Omegastringer (32) gebildet sind.

2. Strukturbauteil nach Anspruch 1,
**dadurch gekennzeichnet,**
**dass** eine Hilfsstrukur (30) zur Einleitung der Verformungskraft vorgesehen ist, die mehrere der durch Omegastringer (32) gebildeten Verteilungs- und Versteifungsprofile (18) aufweist, wobei die Lasteinleitungseinrichtung (38) mehrere der Lasteinleitungselemente (40) zum Einleiten von Last an den Angriffsstellen oder Angriffspunkten (42) in die Verteilungs- und Versteifungsprofile (18) aufweist.

3. Strukturbauteil nach Anspruch 1 oder 2,
**dadurch gekennzeichnet,**
**dass** die Lasteinleitungseinrichtung (38) Gelenke mit einer Drehachse (74) aufweist, die durch die jeweilige Angriffsstelle oder den jeweiligen Angriffspunkt (42) läuft.

4. Strukturbauteil nach Anspruch 3,
**dadurch gekennzeichnet,**
**dass** die Drehachse (74) mit wenigstens einer Richtungskomponente in Längsrichtung des Verteilungs- und Versteifungsprofils (18) verläuft oder mit wenigstens einer Richtungskomponente quer zur Längsrichtung des Verteilungs- und Versteifungsprofils (18) verläuft.

5. Strukturbauteil nach einem der voranstehenden Ansprüche,
**dadurch gekennzeichnet,**
**dass** die Beschläge (52) jeweils einen Befestigungsbereich (60) zum Befestigen des Beschlages (52) an dem Verteilungs- und Versteifungsprofil (18) und einen Gelenkbereich (62) zur gelenkigen Anlenkung des Lasteinleitungselements (40) aufweist.

6. Strukturbauteil Anspruch 5,
**dadurch gekennzeichnet,**
**dass** der Befestigungsbereich (60) als Verstärkung und/oder Versteifung (70) des Verteilungs- und Versteifungsprofils (18) ausgebildet ist.

7. Strukturbauteil nach Anspruch 6,
**dadurch gekennzeichnet,**
**dass** der Befestigungsbereich (60) eine Kanalform (64) mit zwei Schenkeln (66) und einen diese verbindenden Steg (68) aufweist, wobei die Schenkel (66) als Versteifung (70) wirken.

8. Strukturbauteil nach Anspruch 7,
**dadurch gekennzeichnet,**
**dass** der Gelenkbereich (62) an dem Steg (68) ausgebildet ist.

9. Strukturbauteil nach einem der voranstehenden Ansprüche,
**dadurch gekennzeichnet,**
**dass** die Lasteinleitungseinrichtung (38) an das Verteilungs- und Versteifungsprofil (18) mittels einer oder mehrerer Befestigungen befestigt ist, die ausgewählt sind aus einer Gruppe, die wenigstens eine Verschraubung, wenigstens eine Niete, eine stoffschlüssige Verbindung, eine Verschweißung, eine Verklebung, eine nasse Verklebung, eine Befestigung von innen und eine Befestigung von außen enthält.

10. Strukturbauteil nach einem der voranstehenden Ansprüche, **gekennzeichnet durch** einen Aktuator (36) zum Verformen der Haut (16), wobei ein Abtrieb des Aktuators (36) über den Angriffspunkt (42) mit dem Verteilungs- und/oder Versteifungsprofil (18) verbunden ist.

11. Fluiddynamischer Strömungskörper (14), vorzugsweise für ein Luftfahrzeug (20), umfassend wenigstens ein verformbares Strukturbauteil (12) nach einem der voranstehenden Ansprüche.

12. Strömungskörper nach Anspruch 11,
**dadurch gekennzeichnet,**
**dass** der Strömungskörper (14) ausgebildet ist als Tragflügel (24) oder Leitwerksflosse eines Flugzeugs (22).

13. Luftfahrzeug (20), umfassend:
ein Strukturbauteil (12) nach einem der Ansprüche 1 bis 10; und/oder einen Strömungskörper (14) nach einem der Ansprüche 11 oder 12 und/oder eine Auftriebshilfe, die ein Strukturbauteil (12) nach einem der Ansprüche 1 bis 10 umfasst.

## Claims

1. Structural component (12) for a vehicle, in particular an aircraft (20), said structural component (12) being a component for a fluid-dynamical body (14), comprising:
a skin (16) to be deformed, wherein an outer surface (82) of the skin (16) is designed for a fluid-dynamically effective incident flow and is deformable for changing a fluid-dynamical effect,
at least one distribution and stiffening profile (18) for distributing the deformation force to a region of the skin (16) and for stiffening the skin (16), said distribution and stiffening profile (18) being an omega-stringer (32),
a load introduction device (38) for introducing a deformation force into the skin of the structural component to be deformed having positions of attack or points of attack (42) for introducing the deformation force into the omega-stringer (32), wherein the positions of attack or points of attack (42) are located within a space area in the interior of the omega-stringer (32) defined by the outer contour of the omega-stringer (32), and having load introduction elements (40) constructed as fittings (52) guided into the space area in the interior of the omega-stringer (32) for coupling to a respective one of the positions of attack or points of attack (42),
**characterized in that**
the space area is delimited by the inner surface of the skin (16) and is surrounded by the outer contour of the omega-stringer and that the omega-stringer (32) has reception openings (58) at several spaced-apart positions to receive the fittings (52), wherein the reception openings (58) are formed by local openings (58) and/or interruptions in the omega-stringer (32).

2. Structural component according to claim 1,
**characterized in that** an auxiliary structure (30) for introducing the deformation force is provided which includes several of the distribution and stiffening profiles (18) formed by the omega-stringer (32), wherein the load introduction device (38) comprises several load introduction elements (40) for introducing load into the distribution and stiffening profiles (18) at the positions of attack or points of attack (42).

3. Structural component according to claim 1 or 2,
**characterized in that** the load introduction device (38) has joints with an axis of rotation (74) that passes through the respective position of attack or the respective point of attack (42).

4. Structural component according to claim 3,
**characterized in that** the axis of rotation (74) runs with at least one directional component in the longitudinal direction of the distribution and stiffening profile (18) or runs with at least one directional component transversely to the longitudinal direction of the distribution and or stiffening profile (18).

5. Structural component according to one of the preceding claims,
**characterized in that** the fittings (52) respectively have a fixing region (60) for fixing the fitting (52) to the distribution and stiffening profile (18) and a joint region (62) for the articulated coupling of the load introduction element (40).

6. Structural component according to claim 5,
**characterized in that** the fixing region (60) is designed as a reinforcement and/or stiffening profile (18).

7. Structural component according to claim 6,
**characterized in that** the fixing region (60) has channel shape (64) with two legs (66) and with a web (68) interconnecting these legs, wherein the legs (66) are effective as a stiffening (70).

8. Structural component according to claim 7,
**characterized in that** the joint region (62) is formed on the web (68).

9. Structural component according to one of the preceding claims,
**characterized in that** the load introduction device (38) is fixed to the distribution and stiffening profile (18) by means of one or more fastenings that are chosen among a group comprising at least a screw connection, at least a rivet, a substance-to-substance bond, a welding connection, an adhesive connection, wet adhesion, fastening from inside and fastening from outside.

10. Structural component according to one of the preceding claims,
**characterized by** an actuator (36) for deforming the skin (16), wherein an output of the actuator (36) is connected to the distribution and stiffening profile (18) via said point of attack (42).

11. Fluid-dynamical flow body (14), preferably for an aircraft (20), comprising at least a deformable structural component (12) according to one of the preceding claims.

12. Fluid-dynamical flow body according to claim 11,
**characterized in that** the flow body (14) is designed as an airfoil (24) or as a tail fin of an aircraft (22).

13. Aircraft (20), comprising:
a structural component (12) according to one of the claims 1 through 10; and/or a flow body (14) according to one of the claims 11 or 12 and/or a buoyancy aid comprising a structural component (12) according to one of the claims 1 through 10.

## Revendications

1. Composant structurel (12) pour un véhicule, en particulier pour un aéronef (20), le composant structurel (12) étant un composant pour un corps d'écoulement fluidodynamique (14), comportant
une peau (16) à déformer, une surface extérieure (82) de la peau (16) étant réalisée pour l'attaque à effet fluidodynamique et étant déformable pour modifier un effet fluidodynamique,
au moins un profilé de répartition et de rigidification (18) agencé sur une surface intérieure (34) de la peau (16) et destiné à répartir la force de déformation sur une zone de la peau (16) et à rigidifier la peau (16), le profilé de répartition et de rigidification (18) étant un rigidificateur en oméga (32),
un dispositif d'application de charge (38) pour appliquer une force de déformation dans la peau à déformer du composant structurel, ayant des emplacements d'attaque ou des points d'attaque (42) pour appliquer la force de déformation dans le rigidificateur en oméga (32), les emplacements d'attaque ou les points d'attaque (42) étant situés à l'intérieur d'une zone d'espace limitée par le contour extérieur du rigidificateur en oméga (32) à l'intérieur du rigidificateur en oméga (32), et des éléments d'application de charge (40) réalisés sous forme de ferrures (52) qui sont menées dans la zone d'espace à l'intérieur du rigidificateur en oméga (32) pour l'articulation respective à l'un des emplacements d'attaque ou à l'un des points d'attaque (42),
**caractérisé en ce que**
la zone d'espace est limitée par la surface intérieure de la peau (16) et est enfermée par le contour extérieur du rigidificateur en oméga (32), et **en ce que** le rigidificateur en oméga (32) présente des ouvertures de réception (58) pour recevoir les ferrures (52) à plusieurs emplacements espacés, les ouvertures de réception (58) étant formées par des ouvertures locales (58) et/ou par des interruptions dans le rigidificateur en oméga (32).

2. Composant structurel selon la revendication 1,
**caractérisé en ce que**
il est prévu une structure auxiliaire (30) pour appliquer la force de déformation, qui comprend plusieurs des profilés de répartition et de rigidification (18) formés par des rigidificateurs en oméga (32), le dispositif d'application de charge (38) présentant plusieurs des éléments d'application de charge (40) pour appliquer une charge aux emplacements d'attaque ou aux points d'attaque (42) dans les profilés de répartition et de rigidification (18).

3. Composant structurel selon la revendication 1 ou 2,
**caractérisé en ce que**
le dispositif d'application de charge (38) comprend des articulations avec un axe de rotation (74) qui passe par l'emplacement d'attaque respectif ou par le point d'attaque respectif (42).

4. Composant structurel selon la revendication 3,
**caractérisé en ce que**
l'axe de rotation (74) s'étend par au moins une composante directionnelle dans la direction longitudinale du profilé de répartition et de rigidification (18) ou par au moins une composante directionnelle transversalement à la direction longitudinale du profilé de répartition et de rigidification (18).

5. Composant structurel selon l'une des revendications précédentes,
**caractérisé en ce que**
les ferrures (52) présentent chacune une zone de fixation (60) pour fixer la ferrure (52) sur le profilé de répartition et de rigidification (18), ainsi qu'une zone d'articulation (62) pour la fixation articulée de l'élément d'application de charge (40).

6. Composant structurel selon la revendication 5,
**caractérisé en ce que**
la zone de fixation (60) est réalisée sous forme de renforcement et/ou de rigidification (70) du profilé de répartition et de rigidification (18).

7. Composant structurel selon la revendication 6,
**caractérisé en ce que**
la zone de fixation (60) présente une forme en canal (64) avec deux branches (66) et une âme (68) qui les relie, les branches (66) faisant office de rigidification (70).

8. Composant structurel selon la revendication 7,
**caractérisé en ce que**
la zone d'articulation (62) est réalisée sur l'âme (68).

9. Composant structurel selon l'une des revendications précédentes,
**caractérisé en ce que**
le dispositif d'application de charge (38) est fixé sur le profilé de répartition et de rigidification (18) au moyen d'une ou de plusieurs fixations qui sont choisies parmi un groupe comprenant au moins un assemblage vissé, au moins un rivet, une liaison venant de matière, un assemblage soudé, un assemblage collé, un assemblage collé par voie humide, une fixation de l'intérieur et une fixation de l'extérieur.

10. Composant structurel selon l'une des revendications précédentes,
**caractérisé par** un actionneur (36) pour déformer la peau (16), un organe mené de l'actionneur (36) étant relié au profilé de répartition et/ou de rigidification (18) via le point d'attaque (42).

11. Corps d'écoulement fluidodynamique (14), de préférence pour un aéronef (20), comportant au moins un composant structurel déformable (12) selon l'une des revendications précédentes.

12. Corps d'écoulement selon la revendication 11,
**caractérisé en ce que**
le corps d'écoulement (14) est réalisé sous forme d'aile portante (24) ou d'empennage d'un avion (22).

13. Aéronef (20), comportant :
un composant structurel (12) selon l'une des revendications 1 à 10 ; et/ou un corps d'écoulement (14) selon l'une des revendications 11 ou 12, et/ou un accessoire de portance qui comprend un composant structurel (12) selon l'une des revendications 1 à 10.
